Europäisches Patentamt

European Patent Office

Office européen des brevets

(11) Publication number: **0 009 816**
**B1**

(12) **EUROPEAN PATENT SPECIFICATION**

(45) Date of publication of patent specification: 26.06.85

(51) Int. Cl.⁴: **H 01 M 4/74**, B 21 D 31/04

(21) Application number: **79103799.7**

(22) Date of filing: **05.10.79**

(54) **Method and apparatus for orienting and sizing battery grids.**

(30) Priority: **10.10.78 US 949934**

(43) Date of publication of application:
**16.04.80 Bulletin 80/08**

(45) Publication of the grant of the patent:
**26.06.85 Bulletin 85/26**

(84) Designated Contracting States:
**AT BE CH DE FR GB IT LU NL SE**

(56) References cited:
**FR-A- 457 746**
**FR-A-2 134 714**
**US-A-3 947 936**

(73) Proprietor: **BALL CORPORATION**
**345 South High Street**
**Muncie Indiana 47302 (US)**

(72) Inventor: **McDowell, Jerry T.**
**1404 Kevin Lane**
**Greeneville Tenn 37743 (US)**

(74) Representative: **Kraus, Walter, Dr. et al**
**Patentanwälte Kraus Weisert & Partner Thomas-Wimmer-Ring 15**
**D-8000 München 22 (DE)**

Courier Press, Leamington Spa, England.

## Description

The invention relates to a method of orienting and sizing battery grids from a stock material having expanded and unexpanded portions thereon wherein the unexpanded portion including headers lies centrally of the stock material and the expanded portions are greater in thickness than the unexpanded portion, the expanded portions being provided with nodes.

Furthermore the invention relates to an apparatus for orienting and sizing battery grids from stock material having expanded and unexpanded portions wherein the unexpanded portion lies centrally of the stock material.

The invention finds adaptation in the battery grid industry and, in particular, allows the formation of individual grid bodies to render them of a consistent and uniform dimension.

Battery grids are generally made by expanding a metal sheet to form an open network structure and thereafter applying paste thereto by means readily available in the art.

The step of expansion in the process to form the expanded grid structure may be readily made by conventional processes, such as disclosed in US—A—3 891 459. After expansion, the expanded grid structure is subjected to a sizing and orienting process wherein the grid structure is formed to a predetermined size. After this step the expanded grid structure is pasted and the pasting is accomplished by moving the grid structure into a zone where an active material generally a thick, lead-containing paste, is applied to the open network. Various means may be used to apply the active material to the expanded grid structure. In order to deliver a uniform charge for distribution upon and into the open network of the grid without materially deforming the same, pasting machines are utilized and are generally of the so-called Lund or fixed orifice type or the Winkel or belt type. In the Lund type, a strip of battery paste is fed between a pair of rollers rotating to apply pressure to the grid, the paste being thereby forced into the grid structure. In the Winkel belt type, the grids are fed horizontally on a belt under a roller where the battery paste is applied. Pasting machines have also been developed that use ultrasonic energy to convert battery pastes from their normally nonflowable form to a flowable form. After the expanded structure is subjected to the direct and continuous charge of paste, the pasted grid is moved into a wiping or leveling zone where a doctor blade or the nip of a set of spaced apart rollers produce a uniform paste distribution. In this fashion the paste is compressed by mechanical forces into the interstices of the network, the leveling being such as to merely allow the grid structure itself to freely pass through the zone and undergo only minimum, if any, deformation, thereafter, the pasted grid is subjected to a drying operation to thereby affix the paste to the network. In a commercial operation, the production of grids is generally made from a large length of sheet material so that there are a multiplicity of grid structures thereon comprising expanded and unexpanded portions. After drying, the structures must be subjected to a separation or cutting operation to sectionalize and set free the individual grids for further processing. Since such structures are more or less in a delicate state, any slitting or cutting must be carefully done so as not to cause loss of paste from the pasted network. It will be appreciated that the battery grids are easily deformable and may lose their character if adequate means are not employed to handle them. Any undue treatment would cause disruption or loss of paste and, therefore, rejection of the grid structure.

In US—A—1 982 485 a battery grid is described having an expanded portion.

In US—A—3 310 438 a dispersion strengthened lead battery grid structure is disclosed. The structure is formed from expanded lead stock.

In US—A—3 686 916 a special roll is described for use in the manufacture of battery plate grids.

In US—A—3 947 936 there is disclosed expanded metal that has been coined to enhance the characteristics thereof.

In US—A—4 016 633, a method is disclosed for making a battery grid via casting that is subsequently flattened by a pressing process.

In US—A—3 881 952 and US—A—3 891 459 there are disclosed a method and an apparatus of the above indicated types to which the present invention relates. In this method and apparatus the nodes of expanded battery grid structures are flattened by rolling techniques to form certain polygonal configurations.

This method and this apparatus is disadvantageous in that there are produced battery grid structures which do not have completely plane faces on the underside thereof so that the battery grid could be deformed during pasting, drying of the pasted grid and cutting of the grid for sectionalizing individual grids even when it is laid on a plane surface. Such deformation would cause disruption or loss of paste and, therefore, rejection of the grid structure.

It is an object of the present invention to provide a method and an apparatus of orienting and sizing battery grids such that the battery grid would not be unduly deformed during pasting, drying of the paste and cutting and that the method and apparatus are more efficient.

This object is achieved by a method of the type indicated above which is characterized by intermittently advancing the stock material along a predetermined path; retaining the stock material stationary between intermittent advance periods during orienting and sizing the stock material; and forming spaced apart cut out portions by cutting out portions of the unexpanded central portion of the stock material while simultaneously pressing the expanded portion of the stock material between a first pressing surface comprising an array of areas inclined at a predetermined acute angle to the plane of the header and a second pressing surface being plane and parallel to the plane of the header and pressing the expanded portion such that such faces of the nodes facing the second pressing surface become plane and positioned in the plane of such face of the header facing also the second pressing surface and such that the opposite faces of the nodes become plane faces inclined at said predetermined acute angle to the plane of the header face.

The apparatus of the invention by which the above object is achieved is being characterized by means for intermittently advancing the stock material; a sizing and orienting device consisting of reciprocable upper and lower plates provided with orienting and sizing features respectively; the orienting and sizing features of the upper plate being a punch and an array of areas inclined at a predetermined acute angle to a horizontal plane; the orienting and sizing features of the lower plate being a die complementary to the punch and a plane horizontal surface; means for moving one of the plates into engagement with the other of the plates through the stock material so that thereby the punch is moved into cutting engagement with the die to cut out a portion of the unexpanded portion of the stock material, and simultaneously the inclined areas and the plane surface are moved into pressing engagement with the expanded portion; and the means for intermittently advancing the stock material and the means for moving one the plates into engagement with the other of the plates being operable such that the stock material is retained stationary when it is being oriented and sized.

With this method and this apparatus there is obtained a completely plane underside of the battery grid, and the working efficiency is increased because forming the spaced apart cut out portions in the unexpanded portion and pressing the surfaces of the nodes in the expanded portion is achieved in one single step of the method of the invention and in one single reciprocation of the upper and lower plates of the apparatus of the invention.

The method of the invention may include the step of applying a paste to the expanded portion after sizing and orienting, and then drying the paste.

The apparatus of the invention is preferably characterized by the fact that there is further provided a confining means consisting of a pair of opposite rebates extending parallel to one another in spaced relationship along opposite edges of the lower plate and in the direction of the intermittent movement of the stock material.

In preferred embodiments the predetermined angle is greater than 3°, and in more preferred embodiments the predetermined angle is between about 5° and about 10°.

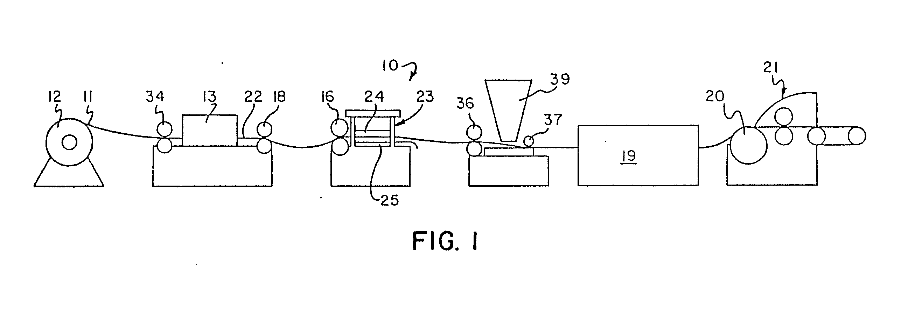

The invention will now be described more detailed by way of embodiments illustrated in Figs. 1 to 6 of the drawing:

Fig. 1 is a schematic illustration of the production of battery grids including an embodiment of an apparatus according to the invention;

Fig. 2 is a front elevational view of plates for orienting and sizing battery grids in spaced apart position for inserting or withdrawing a battery grid illustrated also in Fig. 2;

Fig. 3 is a view similar to Fig. 2 but showing the plates in their closed condition for pressing a battery grid between them and cutting a cut out portion;

Fig. 4 is a cross sectional view of a grid before being pressed between the plates of Figs. 2 and 3;

Fig. 5 is a cross sectional view of the grid of Fig. 4 after it has been pressed between the plates of Figs. 2 and 3; and

Fig. 6 is a plan view of unsectionalized grid structures after being pressed and provided with cut out portions.

Referring now more particularly to the accompanying drawings, 10 indicates generally a battery grid line. In this battery grid line the grids are made initially from an unexpanded metal strip of stock material 11 of metal, such as lead or lead-base alloys, drawn from a pay off roll 12 and conveyed to a conventional expanding machine 13 in which the strip of stock material 11 is expanded to form a grid structure 30 by reciprocating slitting and expanding cutters (not shown). The strip is advanced intermittently.

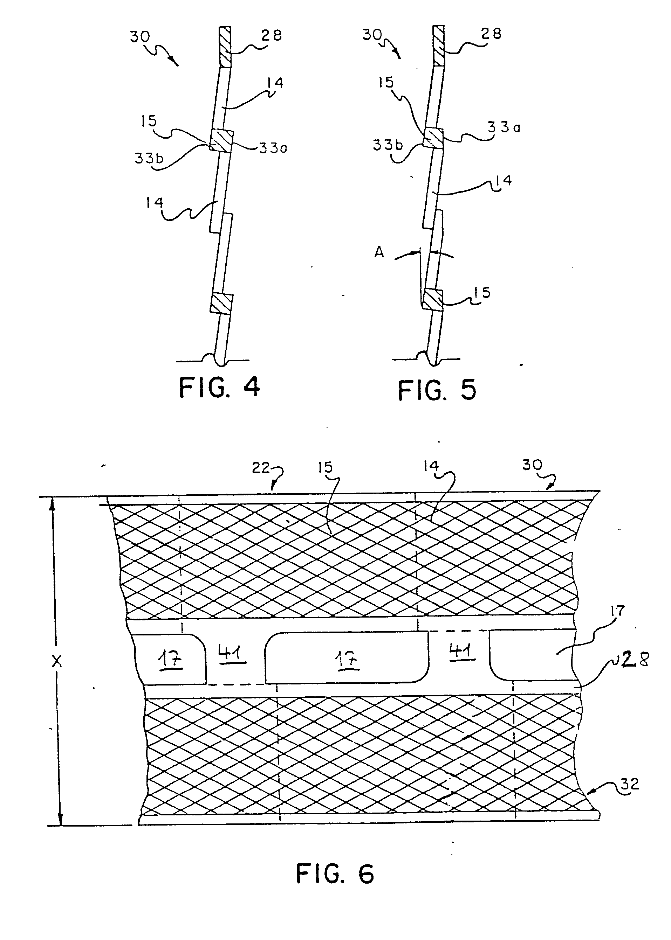

From such expansion operation there results in the expanded portions 22 a grid structure (Fig. 4) having an open network 32 comprising a plurality of skeletal, wire-like elements 14 (Fig. 6) connected one to the other by nodes 15. The wire like elements 14 and nodes 15 form a honeycomb-like structure in plan view (Fig. 6).

Following expansion, the strip with expanded portions 22 is laid down into substantially the same plane as the original unexpanded strip of stock material 11 from which it was formed by advancing the strip having the expanded portions 22 through leveling rollers 18 located near the exit end of the expanding machine 13.

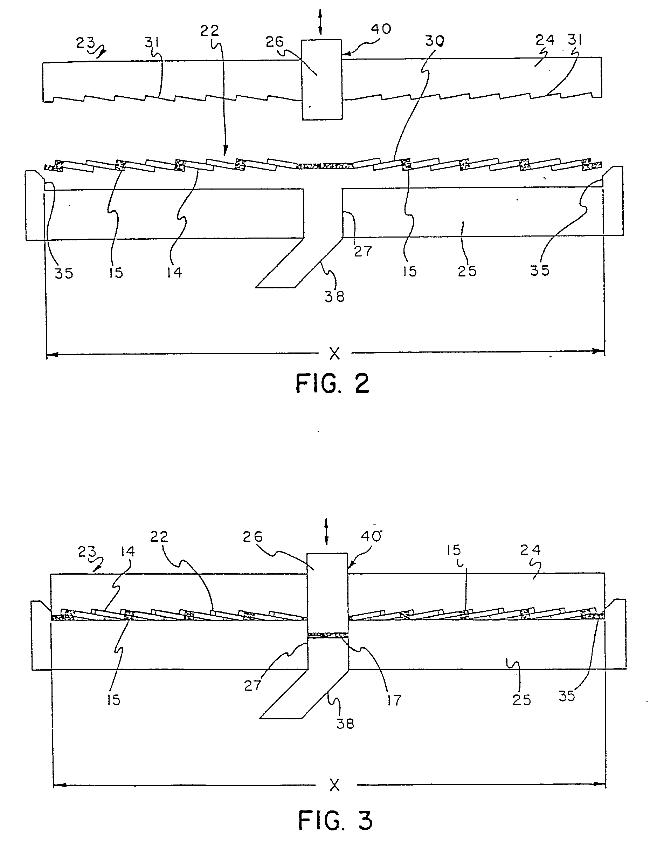

After leveling of the expanded strip, the strip is fed by spaced apart drive means 16 into a scrap removal and orienting and sizing apparatus 23. In this operation a cut out section is formed and the portion 17 so cut out is removed from the strip, this being readily accomplished by a punch and die arrangement 40. At the same time the expanded strip 22 is subjected to this cut out operation, the open network 32 is subjected to a sizing process so that the structure is formed to a predetermined grid form i.e. the grid of Fig. 5 is formed from a grid of Fig. 4 as described below in detail. Moreover the grid is confined to the width X (Fig. 3) and, therefore, the grid strip is also perfectly sized to a predetermined width.

Then the grid strip is conveyed to the next operation and is there ready for pasting via pasting machine 39. The pasting machine may employ flush pasting or belt pasting using conventional pasting techniques as is well-known in the art. The pasted grid structure is thereafter cured or dried by a conventional drying oven 19. The dried grid structure is then advanced to the plate separator device 21 where the structures are sectionalized one from the other.

Referring to Figs. 2 and 3, the sizing and orienting apparatus 23 is shown comprising an upper plate 24 that is adapted to reciprocate within a housing (not shown) so that the upper plate 24 comes into contact with a lower plate 25. Of course, a wide range of means may be used to reciprocate the plate or plates, such means being well-known to those skilled in the art. It can be seen that the upper plate 24 is provided with a punch 26 which is set above a complementary die 27 into which the punch passes in order to cut out an opening within the unexpanded central portion of a stock material. The cut out portion 17 set free passes down a chute 38. An array of inclined planes 31 is provided on the lower part of the upper plate 24 and is arranged to come into engagement with a grid structure 30. Thus, expanded strip 22 to be sized and oriented is pressed between an array of inclined planes 31 and the lower plate 25. In Fig. 3 the closed form of the sizing and orienting apparatus 23 is depicted with the grid structure 30 showing its nodes 15 being oriented. In effect, the faces 33b are brought into contact with the inclined planes 31 when the plate 24 is brought downwardly and the faces 33a of the nodes 15 are brought into contact with the flat portion of lower plate 25. In this fashion, the expanded strip 22 is oriented so that the opposite faces 33a, 33b of the nodes 15 are worked to a predetermined angle. The grid structures are formed to a uniform size by the inclined planes 31 and the rebates 35 of the lower plate 25, Fig. 2. By the process and apparatus of this invention, a plurality of grid structures 30 that are to be further pasted and sectionalized may be worked and sized all at the same time in a most economic manner.

In operation, after the expanded strip 22 has been formed, it is advanced to the orienting and sizing apparatus 23 which comprises a reciprocating upper plate 24 having a plurality of inclined planes 31 thereon along with a centrally located punch 26. The inclined planes 31 are so disposed outwardly of the plate and engage the nodes 15 of the grid network, when the upper plate 24 is brought in pressing engagement with the lower plate 25 via the expanded strip 22. Obviously the strip 22 is not advanced during this pressing operation. When the upper plate 24 moves downwardly and into contact with the lower plate 25 the punch 26 cuts out a portion 17 that falls through the chute 38 and the inclined planes 31 provided on the upper plate work the nodes 15 to orient and size the grid structure. It can be readily appreciated that the inclined planes 31 of the upper plate 24 are so arranged that the grid structure is readily formed as determined by the angle A of said inclined planes 31 and the distance between the rebates 35 of the apparatus. The acute angle A is greater than 3°, preferably between about 5° and 10°.

The preferred form of grid structure made in accordance with the method or apparatus of this invention is an individual structure 30 formed from an expanded metal strip 22, generally a lead-base alloy, and provided with a header 28 and a lug portion 41 of an unexpanded metal strip and an open network portion 32 of expanded metal 22, the open network 32 being defined by wire-like elements 14 which have been pasted and sectionalized as aforementioned. Fig. 4 depicts a portion of the expanded strip 22 as it comes from the expander 13 and prior to being sized and oriented by the subject invention. The nodes 15 are more or less rectangular or rhomboid-like in cross section having their faces 33a and 33b so formed that they are substantially parallel. Fig. 5 depicts the same portion of the grid structure after being subjected to the method in accordance with the invention. It can be seen that one face 33a is substantially parallel to the header and the other face 33b is inclined to said header by a predetermined angle A.

By concurrently cutting out cut out portions 17 and pressing the grid structure such that the nodes 15 are formed from the shape indicated in Fig. 4 into the shape illustrated in Fig. 5 there are obtained advantages in that any horizontal displacement of the grid structure within the apparatus of Figs. 2 and 3 is eliminated, so that the sizing of the nodes becomes most effective and the grid is confined between opposite rebates 35 (Figs. 2 and 3). Thus, the grid structure is firmly anchored as the array of inclined planes work the nodal portions. This offers a most uniform grid structure.

**Claims**

1. A method of orienting and sizing battery grids from a stock material (11) having expanded (22) and unexpanded portions (17, 28, 41) thereon wherein the unexpanded portion (17, 28, 41) including headers (28) lies centrally of said stock material (11) and the expanded portions (22) are greater in thickness than the unexpanded portion (17, 28, 41), said expanded portions (22) being provided with nodes (15), said method being characterized by intermittently advancing said stock material (11) along a predetermined path; retaining said stock material (11) stationary between intermittent advance periods during orienting and sizing said stock material (11); and forming spaced apart cut out portions by cutting out portions (17) of said unexpanded central portion (17, 28, 41) of said stock material (11) while simultaneously pressing said expanded portion (22) of said stock material (11) between a first pressing surface comprising an array of areas (31) inclined at a predetermined acute angle (A) to the plane of the header (28) and a second pressing surface being plane and parallel to the plane of said header (28) and pressing said expanded portion (22) such that such faces (33a) of said nodes (15) facing said second pressing surface become plane and positioned in the plane of such face of said header (28) facing also said second pressing surface and such that the opposite faces (33b) of said nodes (15) become plane faces inclined at said predetermined acute angle (A) to the plane of said header (28) face.

2. The method of claim 1, characterized by the fact that said acute angle (A) is greater than about 3°.

3. The method of claim 1, characterized by the fact that said acute angle (A) is between about 5° and 10°.

4. The method of claim 1, characterized by the fact that the method includes the step of applying a paste to the expanded portion (22) after sizing and orienting, and then drying said paste.

5. An apparatus for orienting and sizing battery grids from stock material (11) having expanded (22) and unexpanded portions (17, 28, 41) wherein the unexpanded portion (17, 28, 41) lies centrally of the stock material (11) being characterized by means (16) for intermittently advancing said stock material (11); a sizing and orienting device (23) consisting of reciprocable upper and lower plates (24, 25) provided with orienting and sizing features (31, 35) respectively; said orienting and sizing features of the upper plate (24) being a punch (26) and an array of areas (31) inclined at a predetermined acute angle (A) to a horizontal plane; said orienting and sizing features of the lower plate (25) being a die (27) complementary to said punch (26) and a plane horizontal surface; means for moving one (24) of said plates (24, 25) into engagement with the other (25) of said plates (24, 25) through said stock material (11) so that thereby said punch (26) is moved into cutting engagement with said die (27) to cut out a portion (17) of said unexpanded portion (17, 28, 41) of said stock material (11), and simultaneously said inclined areas (31) and said plane surface are moved into pressing engagement with said expanded portion (22); and said means (16) for intermittently advancing said stock material (11) and said means for moving one (24) said plates (24, 25) into engagement with the other (25) of said plates (24, 25) being operable such that the stock material (11) is retained stationary when it is being oriented and sized.

6. The apparatus of claim 5, characterized by the fact that there is further provided a confining means (35) consisting of a pair of opposite rebates extending parallel to one another in spaced relationship along opposite edges of the lower plate (25) and in the direction of said intermittent movement of said stock material (11).

7. The apparatus of claim 5, characterized by the fact that said predetermined angle (A) is greater than 3°.

8. The apparatus of claim 5, characterized by the fact that said predetermined angle (A) is between about 5° and about 10°.

## Patentansprüche

1. Verfahren zur Ausrichtung und Anpassung von Gitterplatten für Batterien aus einem Rohmaterial (11), auf dem sich expandierte (22) und nichtexpandierte Teile (17, 28, 41) befinden, wobei die nichtexpandierten Teile (17, 28, 41), die Verteiler (28) aufweisen, mittig des Rohmaterials (11) liegen und die expandierten Teile (22) eine größere Dicke als der nichtexpandierte Teil (17, 28, 41) haben, und wobei die expandierten Teile (22) mit Knoten (15) versehen sind, wobei dieses Verfahren gekennzeichnet ist durch intermittierendes Vorschieben des Rohmaterials (11) längs eines vorbestimmten Weges; stationäres Festhalten des Rohmaterials (11) zwischen intermittierenden Vorschubperioden während der Ausrichtung und Anpassung des Rohmaterials (11); Ausbilden von im Abstand voneinander befindlichen Ausschnitteilen durch Ausschneiden von Teilen (17) des nichtexpandierten mittigen Teils (17, 28, 41) des Rohmaterials (11), während gleichzeitig der expandierte Teil des Rohmaterials (11) zwischen einer ersten Preßoberfläche, die eine Anordnung von Flächen (31) umfaßt, welche unter einem vorbestimmten spitzen Winkel (A) zur Ebene des Verteilers (28) geneigt sind, und einer zweiten Preßoberfläche, die eben und parallel zur Ebene des Verteilers (28) ist, gepreßt wird, sowie der expandierte Teil (22) derart gepreßt wird, daß solche Flächen (33a) der Knoten (15), welche der zweiten Preßoberfläche zugewandt sind, eben und in der Ebene dieser Fläche des Verteilers (28), die auch der zweiten Preßoberfläche zugewandt ist, positioniert werden, und derart, daß die gegenüberliegenden Flächen (33b) der Knoten (15) ebene Flächen werden, die unter dem vorbestimmten spitzen Winkel (A) zu der Ebene der Fläche des Verteilers (28) geneigt sind.

2. Verfahren nach Anspruch 1, dadurch gekennzeichnet, daß der spitze Winkel (A) größer als etwa 3° ist.

3. Verfahren nach Anspruch 1, dadurch gekennzeichnet, daß der spitze Winkel (A) zwischen etwa 5° und 10° beträgt.

4. Verfahren nach Anspruch 1, dadurch gekennzeichnet, daß das Verfahren den Schritt des Aufbringens einer Paste auf den expandierten Teil (22) nach der Ausrichtung und Anpassung, und dann des Trocknens dieser Paste umfaßt.

5. Vorrichtung zur Ausrichtung und Anpassung von Gitterplatten für Batterien aus Rohmaterial (11), das expandierte (22) und nichtexpandierte Teile (17, 28, 41) hat, wobei der nichtexpandierte Teil (17, 28, 41) mittig des Rohmaterials (11) liegt, gekennzeichnet durch eine Einrichtung (16) zum intermittierenden Vorschieben des Rohmaterials (11); eine Anpassungs- und Ausrichtungseinrichtung (23), die aus hin- und herbewegbaren oberen und unteren Platten (24, 25) besteht, welche mit Ausrichtungs- bzw. Anpassungsmerkmalen (31, 35) versehen sind; wobei die Ausrichtungs- und Anpassungsmerkmale der oberen Platte (24) eine Oberstanze (26) und eine Anordnung von Flächen (31), die unter einem vorbestimmten spitzen Winkel (A) zu einer Horizontalebene geneigt sind, sind; wobei ferner die Ausrichtungs- und Anpassungsmerkmale der unteren Platte (25) eine Unterstanze (27), welche komplementär zu der Oberstanze (26) ist, und eine ebene horizontale Oberfläche sind; eine Einrichtung zum Bewegen von einer (24) der Platten (24, 25) in Eingriff mit der anderen (25) der Platten (24, 25) durch das Rohmaterial (11) so, daß dadurch die Oberstanze (25) in Schneideingriff mit der Unterstanze (27) bewegt wird, so daß ein Teil (17) des nichtexpandierten Teils (17, 28, 41) des Rohmaterials (11) ausgestanzt wird, und gleichzeitig die geneigten Fläche (31) und die ebene Oberfläche in Preßeingriff mit dem expandierten Teil (22) bewegt werden; und wobei die Einrichtung (16) zum intermittierenden Vorschieben des Rohmaterials (11) und die Einrichtung zum Bewegen von einer (24) der Platten (24, 25) in Eingriff mit der anderen (25) der Platten (24, 25) derart betreibbar sind, daß das Rohmaterial (11) stationär festgehalten wird, wenn es ausgerichtet und angepaßt wird.

6. Vorrichtung nach Anspruch 5, dadurch gekennzeichnet, daß weiter eine Einschließungseinrichtung (35) vorgesehen ist, die aus einem Paar von entgegengesetzten Falzen besteht, welche sich parallel zueinander und im Abstand voneinander entlang entgegengesetzter Ränder der unteren Platte (25) sowie in der Richtung der intermittierenden Bewegung des Rohmaterials (11) erstrecken.

7. Vorrichtung nach Anspruch 5, dadurch gekennzeichnet, daß der vorbestimmte Winkel (A) größer als 3° ist.

8. Vorrichtung nach Anspruch 5, dadurch gekennzeichnet, daß der vorbestimmte Winkel (A) zwischen etwa 5° und etwa 10° beträgt.

**Revendications**

1. Procédé d'orientation et de mise à dimension de grilles de batterie à partir d'une matière de base (11), comportant des régions déployées (22) et des régions non déployées (17, 28, 41), dont la région non déployée (17, 28, 41) comprenant des collecteurs (28) est situé au centre de la matière de base (11) et dont les régions déployées (22) sont plus épaisses que la région non déployée (17, 28, 41), les régions déployées comportant des noeuds (15), ledit procédé étant caractérisé par l'avance intermittente de la matière de base (11) le long d'un chemin prédéterminé; l'immobilisation de la matière de base (11), entre des périodes d'avance intermittente, pendant l'orientation et la mise à dimension de la matière de base (11); et la formation de parties découpées espacées, par enlèvement de parties de la région centrale non déployée (17, 28, 41) de la matière de base (11), pendant que la région déployée (22) de la matière de base (11) est simultanément pressée entre une première surface de pression, comprenant un ensemble de surfaces (31) inclinées suivant un angle aigu prédéterminé (A) par rapport au plan du collecteur (28), et une deuxième surface de pression qui est plane et parallèle au plan de ce collecteur (28), la région déployée (22) étant pressée de sorte que les faces (33a) des noeuds (15) tournées vers la deuxième surface de pression deviennent planes et se trouvent dans le plan de la face du collecteur (28) tournée également vers la deuxième surface de pression, et de sorte que les faces opposées (33b) des noeuds (15) deviennent des faces planes inclinées suivant le dit angle aigu prédéterminé (A) par rapport au plan de la face du collecteur (28).

2. Procédé suivant la revendication 1, caractérisé en ce que ledit angle aigu (A) est supérieur à 3° environ.

3. Procédé suivant la revendication 1, caractérisé en ce que ledit angle aigu (A) est compris entre 5° et 10° environ.

4. Procédé suivant la revendication 1, caractérisé en ce que le procédé comprend l'opération d'application d'une pâte à la région déployée (22) après mise à dimension et orientation, puis de séchage de cette pâte.

5. Appareil d'orientation et de mise à dimension de grilles de batterie à partir d'une matière de base (11), comportant des régions déployées (22) et des régions non déployées (17, 28, 41), dont la région non déployée (17, 28, 41) est située au centre de la matière de base (11), caractérisé en ce qu'il comprend des moyens (16) pour l'avance intermittente de la matière de base (11); un dispositif (23) de mise à dimension et d'orientation, constitué par des plaques supérieure et inférieure (24, 25) à mouvement alternatif possédant respectivement des organes d'orientation et de mise à dimension (31, 35); les organes d'orientation et de mise à dimension de la plaque supérieure (24) consistant en un poinçon (26) et en une suite de surfaces (31) inclinées d'un angle aigu prédéterminé (A) par rapport à un plan horizontal; les organes d'orientation et de mise à dimension de la plaque inférieure (25) consistant en une matrice (27) complémentaire du poinçon (26) et en une surface horizontale plane; des moyens de déplacement de l'une (24) des dites plaques (24, 25) en contact avec l'autre (25) des plaques (24, 25), par l'intermédiaire de la matière de base (11), de sorte que le poinçon (26) est amené en engagement de coupe avec la matrice (27) pour découper une partie (17) de la région non déployée (17, 28, 41) de la matière de base (11), et simultanément les surfaces inclinées (31) et la surface plane sont amenées en contact de pression avec la région déployée (22); et les moyens (16) d'avance intermittente de la matière de base (11) ainsi que les moyens de déplacement de l'une (24) des plaques (24, 25) en contact avec l'autre (25) des dites plaques (24, 25) étant actionnables de sorte que la matière de base (11) est maintenue immobile pendant son orientation et sa mise à dimension.

6. Appareil suivant la revendication 5, caractérisé en ce qu'il comprend en outre des moyens de retenue (35) constitués par deux butées opposées, espacées et parallèles entre elles, le long des bords opposés de la plaque inférieure (25) et dans la direction du mouvement intermittant de la matière de base (11).

7. Appareil suivant la revendication 5, caractérisé en ce que ledit angle prédéterminé (A) est plus grand que 3°.

8. Appareil suivant la revendication 5, caractérisé en ce que ledit angle prédéterminé (A) est compris entre environ 5° et environ 10°.

FIG. I

FIG. 2

FIG. 3

FIG. 4

FIG. 5

FIG. 6